# EUROPEAN PATENT APPLICATION

(11) **EP 4 009 199 A1**
(43) Date of publication of application: **08.06.2022**
(21) Application number: 20834253.5
(22) Date of filing: 03.07.2020
(51) Int. Cl.: G06F 17/00, G09B 9/00

(54) **THERMAL-HYDRAULIC THREE-DIMENSIONAL REAL-TIME DYNAMIC SIMULATION METHOD AND SYSTEM FOR NUCLEAR POWER PLANT**

(30) Priority: 04.07.2019 CN 201910598690
(71) Applicant: China Nuclear Power Engineering Co., Ltd., Shenzhen, Guangdong 518124 (CN); China Nuclear Power Design Company Ltd. (Shenzhen), Shenzhen, Guangdong 518100 (CN); China General Nuclear Power Corporation, Shenzhen, Guangdong 518026 (CN); CGN Power Co., Ltd., Shenzen, Guangdong 518026 (CN)
(72) Inventor: YANG, Zhenghui, Shenzhen, Guangdong 518100 (CN); LI, Dan, Shenzhen, Guangdong 518100 (CN); WANG, Hao, Shenzhen, Guangdong 518100 (CN); ZHANG, Yi, Shenzhen, Guangdong 518100 (CN); TIAN, Li cheng, Shenzhen, Guangdong 518100 (CN)
(74) Representative: Greaves Brewster LLP
(86) International application number: PCT/CN2020/100124
(87) International publication number: WO 2021/000931

(57) **Abstract**

The present invention provides a thermal-hydraulic three-dimensional real-time dynamic simulation system and method for a nuclear power plant. The thermal-hydraulic three-dimensional real-time dynamic simulation system for a nuclear power plant includes: a model building module (100), configured to construct a thermal-hydraulic three-dimensional model for a nuclear power plant, wherein the thermal-hydraulic three-dimensional model for a nuclear power plant may correspondingly control different characteristics changes via different node parameters; a data processing module (200), connected to a nuclear power plant simulator (10) and configured to acquire real-time data within the nuclear power plant simulator (10) in real time and send the real-time data to a data driving module (300); and the data driving module (300), connected to the model building module (100) and the data processing module (200), and configured to receive the real-time data and associate the received real-time data with the thermal-hydraulic three-dimensional model for a nuclear power plant via the node parameters, to dynamically simulate the thermal-hydraulic three-dimensional model for a nuclear power plant in real time. The present invention realizes a more intuitive and vivid reproduction of the operating conditions of the system under various working conditions of the nuclear power plant, so as to provide an intuitive and vivid three-dimensional visual nuclear power thermal-hydraulic model for a user.

## Description

### FIELD OF THE INVENTION

The present invention generally relates to nuclear power plants and, more particularly, to a thermal-hydraulic three-dimensional real-time dynamic simulation method and system for a nuclear power plant.

### BACKGROUND OF THE INVENTION

At present, nuclear power plants generally adopt the main control room simulator simulation platform to construct the real operating conditions of the nuclear power plant to train operators. To show the real operating conditions of the nuclear power plant, the real-time data of the traditional simulator simulation platform displays as discrete numerical values, mainly two-dimensional images. Due to the development of three-dimensional digital nuclear power plants, digital nuclear power plants begin to gradually extend from the design field to other fields of nuclear power technology.

At present, the thermal-hydraulic simulation of nuclear power plant operating conditions mainly relies on the traditional simulator simulation platform, which has the following disadvantages. 1) There is no effective three-dimensional visual simulation means. Traditional simulators mainly display discrete numerical values in real time, supplemented by corresponding two-dimensional images, which cannot visually represent the changing process of thermal-hydraulic phenomena. 2) The human input is large and the training cost is high. The principles involved in the thermal-hydraulic power of nuclear power plants are complicated. Relying solely on the discrete numbers and two-dimensional images of the simulator is especially difficult for training new trainees, which requires plenty of time and manpower.

So far, there is no open, advanced and mature thermal-hydraulic three-dimensional visual real-time dynamic simulation solution at home and abroad. What is needed, therefore, is to provide a thermal-hydraulic three-dimensional real-time dynamic simulation method and system for a nuclear power plant, to solve the technical problem that there is no effective three-dimensional visual simulation method in the prior art.

### SUMMARY OF THE INVENTION

One object of the present invention is to provide a thermal-hydraulic three-dimensional real-time dynamic simulation method and system for a nuclear power plant, to solve the technical problems in the prior art, such as no effective three-dimensional visual simulation method in the prior art, as well as large human input and high training cost in the prior art.

According to one embodiment of the present invention, a thermal-hydraulic three-dimensional real-time dynamic simulation system for a nuclear power plant includes:
a model building module, configured to construct a thermal-hydraulic three-dimensional model for a nuclear power plant, wherein the thermal-hydraulic three-dimensional model for a nuclear power plant may correspondingly control different characteristics changes via different node parameters;
a data processing module, connected to a nuclear power plant simulator and configured to acquire real-time data within the nuclear power plant simulator in real time and send the real-time data to a data driving module; and
the data driving module, connected to the model building module and the data processing module, and configured to receive the real-time data and associate the received real-time data with the thermal-hydraulic three-dimensional model for a nuclear power plant via the node parameters, to dynamically simulate the thermal-hydraulic three-dimensional model for a nuclear power plant in real time.

According to one aspect of the present invention, the model building module includes:
a thermal-hydraulic basic model building module for a nuclear power plant, configured to build a thermal-hydraulic three-dimensional basic model for a nuclear power plant, and control a basic texture of the thermal-hydraulic three-dimensional basic model for a nuclear power plant via a first node parameter;
a thermal-hydraulic three-dimensional model building module for a nuclear power plant, connected to the thermal-hydraulic basic model building module for a nuclear power plant, and configured to add a number of node parameters to the thermal-hydraulic three-dimensional basic model for a nuclear power plant, debug a number of node parameters, and build a thermal-hydraulic three-dimensional model for a nuclear power plant; and
an interface opening module, connected to the thermal-hydraulic three-dimensional model building module for a nuclear power plant, and configured to open a number of node parameters to the outside, so as to realize real-time data connection with the data driving module.

According to one aspect of the present invention, the thermal-hydraulic basic model building module for a nuclear power plant includes:
a basic texture module, configured to select basic texture conforming to a water material and create a basic flow track model of the water material; and
a shader module, connected to the basic texture moduleand configured to generat a shader basic program, acquire the basic texture via the shader basic program, modify a first node parameter in the shader basic program, and combine the basic flow track model with equipments of the nuclear power plant, to form a thermal-hydraulic three-dimensional basic model for a nuclear power plant.

According to one aspect of the present invention, the thermal-hydraulic three-dimensional model building module for a nuclear power plant includes:
a texture adding module, connected to the shader module and configured to add a second node parameter and a third node parameter to the thermal-hydraulic three-dimensional basic model for a nuclear power plant, to control normal texture and bubble texture;
a texture overlaying module, connected to the texture adding module, and configured to package the basic texture, the normal texture and the bubble texture, list the first node parameter, the second node parameter and the third node parameter, and control the thermal-hydraulic three-dimensional basic model for a nuclear power plant via the first node parameter, the second node parameter and the third node parameter;
a rendering module, connected to the texture overlaying module and configured to complete rendering configuration and setting files in the shader basic program, and digitize the first node parameter, the second node parameter and the third node parameter; and
a debugging module, connected to the rendering module and configured to adjust range values of the first node parameter, the second node parameter and the third node parameter, debug overall texture effect, and construct a thermal-hydraulic three-dimensional model for a nuclear power plant.

According to one aspect of the present invention, the data processing module includes:
an initializing module, configured to initialize via a program initialization entry and obtain configuration file information, and create thread management objects;
an object creating module, configured to creat a socket udp object, acquire real-time data in the nuclear power plant simulator in real time, and send the real-time data to a data processing center for storage; and
a data transferring module, connected to the object creating module and configured to creat a sub-thread via the thread management objects, to transfer the real-time data stored in the data processing center to the data driving module in real time.

According to one aspect of the present invention, the sub-thread includes:
a data acquisition thread, configured to wait to receive the real-time data in the simulator, and receive the real-time data and updates latest real-time data to a data memory dictionary when the real-time data in the simulator changes;
a data packaging thread, configured to package the updated real-time data in the data memory dictionary at a fixed frequency and put the same into a data memory queue;
a data sending thread, configured to obtain real-time data from the data memory queue at a fixed frequency and send the same to the data driving module via the socket udp object; and
a daemon thread, configured to prevent the data acquisition thread, the data packing thread and the data sending thread from stopping due to program exception.

According to one aspect of the present invention, the data driving module includes:
a data receiving and converting module, connected to the data transferring module, and configured to receive real-time data via a service interface and convert the real-time data into a lightweight byte sequence via a serialization interface;
a data parsing and restoring modul, connected to the data receiving and converting module, and configured to parse and restor the real-time data according to a specified format via a deserialization interface; and
a data-binding driving module, connected to the data parsing and restoring module and the interface opening module, and configured to correspondingly bind the parsed and restored real-time data to the first node parameter, the second node parameter and the third node parameter of the thermal-hydraulic three-dimensional model for a nuclear power plant according to properties thereof, and after binding, drive the the first node parameter, the second node parameter and the third node parameter to change in real time, to realize three-dimensional real-time dynamic change of the thermal-hydraulic three-dimensional model for a nuclear power plant.

According to another embodiment of the present invention, a thermal-hydraulic three-dimensional real-time dynamic simulation method for a nuclear power plant includes the steps of:
Step S1, constructing a thermal-hydraulic three-dimensional model for a nuclear power plant, and the thermal-hydraulic three-dimensional model for a nuclear power plant can correspondingly control different characteristic changes via different node parameters;
Step S2, acquiring real-time data in the nuclear power plant simulator in real time, and sending the real-time data to a data driving module; and
Step S3: receiving the real-time data and associating the received real-time data with the thermal-hydraulic three-dimensional model for a nuclear power plant through the node parameters, to dynamically simulate the thermal-hydraulic three-dimensional model for a nuclear power plant in real time.

According to one aspect of the present invention, step S1 includes the steps of:
Step S11, creating a thermal-hydraulic three-dimensional basic model for a nuclear power plant, and controlling a basic texture of the thermal-hydraulic three-dimensional basic model for a nuclear power plant via a first node parameter;
Step S12, adding a plurality of node parameters to the thermal-hydraulic three-dimensional basic model for a nuclear power plant, and debugging a plurality of node parameters to construct a thermal-hydraulic three-dimensional model for a nuclear power plant; and
Step S13: opening a plurality of node parameters to the outside, to realize real-time data connection with the data driving module.

According to one aspect of the present invention, step S11 includes the steps of:
Step S111, selecting a basic texture conforming to water material, and creating a basic flow track model of the water material; and
Step S112: generating a shader basic program, acquiring the basic texture with the shader basic program, modifying the first node parameters in the shader basic program, and combining the basic flow track model with equipments of the nuclear power plant, so as to form a thermal-hydraulic three-dimensional basic model for a nuclear power plant.

According to one aspect of the present invention, step S12 includes the steps of:
Step S121, adding a second node parameter and a third node parameter to the thermal-hydraulic three-dimensional basic model for a nuclear power plant, to control the normal texture and the bubble texture;
Step S122, packaging the basic texture, the normal texture and the bubble texture, listing the first node parameter, the second node parameter and the third node parameter; and controlling the thermal-hydraulic three-dimensional model for a nuclear power plant via the first node parameter, the second node parameter and the third node parameter;
Step S123, completing rendering configuration and setting files in the shader basic program, and digitizing the first node parameter, the second node parameter and the third node parameter; and
Step S124, adjusting range values of the first node parameter, the second node parameter and the third node parameter, debugging overall texture effect, and constructing the thermal-hydraulic three-dimensional model for a nuclear power plant.

According to one aspect of the present invention, step S2 includes the steps of:
Step S21, initializing via a program initialization entry and obtaining configuration file information, and creating thread management objects;
Step S22, creating a socket udp object, acquiring real-time data in the nuclear power plant simulator in real time, and sending the real-time data to a data processing center for storage; and
Step S23, creating a sub-thread via the thread management objects, to transfer the real-time data stored in the data processing center to the data driving module in real time.

According to one aspect of the present invention, step S3 includes the steps of:
Step S31, the data driving module receiving the real-time data through a service interface, and converting the real-time data into a lightweight byte sequence via a serialization interface;
Step S32, parsing and restoring the real-time data according to a specified format via a deserialization interface; and
Step S33: correspondingly binding the parsed and restored real-time data to the first node parameter, the second node parameter and the third node parameter of the thermal-hydraulic three-dimensional model for a nuclear power plant according to properties of the parsed and restored real-time data, and after binding, driving the the first node parameter, the second node parameter and the third node parameter to change in real time, to realize three-dimensional real-time dynamic change of the thermal-hydraulic three-dimensional model for a nuclear power plant.

Compared with the prior art, the present invention has the following advantages. The present invention provides a thermal-hydraulic three-dimensional real-time dynamic simulation system and method for a nuclear power plant, which combines the real-time data of the simulator with the thermal-hydraulic model for a nuclear power plant, to associate the real-time data of the simulator with the digital three-dimensional model. The present invention provides a three-dimensional real-time dynamic visualization for the thermal-hydraulic simulation of the nuclear power plant, to realize a more intuitive and vivid reproduction of the operating conditions of the system under various working conditions of the nuclear power plant. The present invention also provides a new training method for the training of relevant personnel, to improve the training effect.

### BRIEF DESCRIPTION OF THE DRAWINGS

Fig. 1 shows an illustrative block diagram of a thermal-hydraulic three-dimensional real-time dynamic simulation system for a nuclear power plant according to a first embodiment of the present invention;
Fig. 2 shows an illustrative block diagram of a model building module of the thermal-hydraulic three-dimensional real-time dynamic simulation system for a nuclear power plant according to a first embodiment of the present invention;
Fig. 3 shows a detailed block diagram of the model building module of the thermal-hydraulic three-dimensional real-time dynamic simulation system for a nuclear power plant according to a first embodiment of the present invention;
Fig. 4 shows an illustrative block diagram of a data processing module of the thermal-hydraulic three-dimensional real-time dynamic simulation system for a nuclear power plant according to a first embodiment of the present invention;
Fig. 5 shows an illustrative block diagram of a sub-thread of the thermal-hydraulic three-dimensional real-time dynamic simulation system for a nuclear power plant according to a first embodiment of the present invention;
Fig. 6 shows an illustrative block diagram of a data driving module of the thermal-hydraulic three-dimensional real-time dynamic simulation system for a nuclear power plant according to a first embodiment of the present invention;
Fig. 7 shows another illustrative block diagram of the data driving module of the thermal-hydraulic three-dimensional real-time dynamic simulation system for a nuclear power plant according to a first embodiment of the present invention;
Fig. 8 shows an illustrative flow chart diagram of a thermal-hydraulic three-dimensional real-time dynamic simulation method for a nuclear power plant according to a second embodiment of the present invention;
Fig. 9 shows an illustrative flow chart diagram of step S1 of the thermal-hydraulic three-dimensional real-time dynamic simulation method for a nuclear power plant according to a second embodiment of the present invention;
Fig. 10 shows an illustrative flow chart diagram of step S11 of the thermal-hydraulic three-dimensional real-time dynamic simulation method for a nuclear power plant according to a second embodiment of the present invention;
Fig. 11 shows an illustrative flow chart diagram of step S12 of the thermal-hydraulic three-dimensional real-time dynamic simulation method for a nuclear power plant according to a second embodiment of the present invention;
Fig. 12 shows an illustrative flow chart diagram of step S2 of the thermal-hydraulic three-dimensional real-time dynamic simulation method for a nuclear power plant according to a second embodiment of the present invention; and
Fig. 13 shows an illustrative flow chart diagram of step S3 of the thermal-hydraulic three-dimensional real-time dynamic simulation method for a nuclear power plant according to a second embodiment of the present invention.

### DETAILED DESCRIPTION OF THE INVENTION

The present invention aims to solve the technical problems in the prior art, i.e. no effective three-dimensional visual simulation method in the prior art, as well as large human input and high training cost in the prior art and provide a thermal-hydraulic three-dimensional real-time dynamic simulation system and method for a nuclear power plant, which combines the real-time data of the simulator with the thermal-hydraulic model for a nuclear power plant, to associate the real-time data of the simulator with the digital three-dimensional model. The present invention provides a three-dimensional real-time dynamic visualization for the thermal-hydraulic simulation of the nuclear power plant, to realize a more intuitive and vivid reproduction of the operating conditions of the system under various working conditions of the nuclear power plant. The present invention also provides a new training method for the training of relevant personnel, to improve the training effect.

In order to make the objects, technical solutions and advantages of the present invention clearer, the embodiments of the present invention will be described in detail below with reference to the accompanying drawings.

### First Embodiment

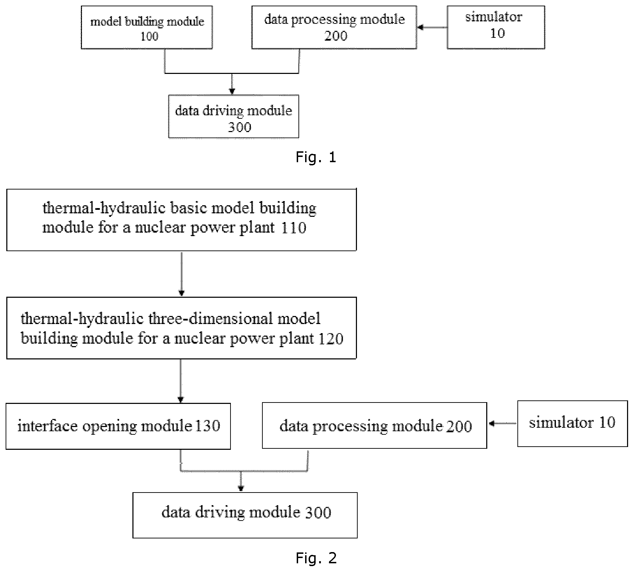

Referring to Fig. 1, a thermal-hydraulic three-dimensional real-time dynamic simulation system for a nuclear power plant includes: a model building module 100, configured to construct a thermal-hydraulic three-dimensional model for a nuclear power plant, wherein the thermal-hydraulic three-dimensional model for a nuclear power plant may correspondingly control different characteristics changes via different node parameters; a data processing module 200, connected to a nuclear power plant simulator 10 and configured to acquire real-time data within the nuclear power plant simulator 10 in real time and send the real-time data to a data driving module 300; and the data driving module 300, connected to the model building module 100 and the data processing module 200 and configured to receive the real-time data and associate the received real-time data with the thermal-hydraulic three-dimensional model for a nuclear power plant via the node parameters, to dynamically simulate the thermal-hydraulic three-dimensional model for a nuclear power plant in real time. The present invention provides a three-dimensional real-time dynamic visualization for the thermal-hydraulic simulation of the nuclear power plant, to realize a more intuitive and vivid reproduction of the operating conditions of the system under various working conditions of the nuclear power plant. The present invention also provides a new training method for the training of relevant personnel, to improve the training effect.

Referring to Fig. 2, the model building module 100 includes: a thermal-hydraulic basic model building module for a nuclear power plant 110, configured to build a thermal-hydraulic three-dimensional basic model for a nuclear power plant and control a basic texture of the thermal-hydraulic three-dimensional basic model for a nuclear power plant via a first node parameter; a thermal-hydraulic three-dimensional model building module for a nuclear power plant 120 connected to the thermal-hydraulic basic model building module for a nuclear power plant 110, and configured to add a number of node parameters to the thermal-hydraulic three-dimensional basic model for a nuclear power plant, debug a number of node parameters, and build a thermal-hydraulic three-dimensional model for a nuclear power plant; and an interface opening module 130, connected to the thermal-hydraulic three-dimensional model building module for a nuclear power plant 120, and configured to open a number of node parameters to the outside, so as to realize real-time data connection with the data driving module 300.

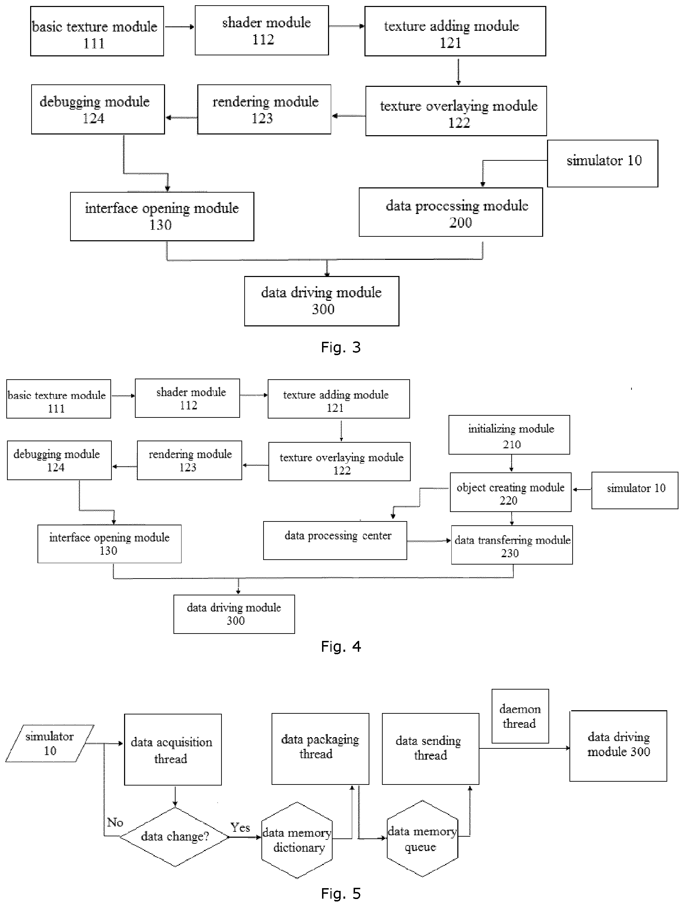

Referring to Fig. 3, the thermal-hydraulic basic model building module for a nuclear power plant 110 includes: a basic texture module 111, configured to select basic texture conforming to a water material and create a basic flow track model of the water material; and a shader module 112, connected to the basic texture module 111 and configured to generat a shader basic program, acquire the basic texture via the shader basic program, modify a first node parameter in the shader basic program, and combine the basic flow track model with equipments of the nuclear power plant, to form a thermal-hydraulic three-dimensional basic model for a nuclear power plant.

The thermal-hydraulic three-dimensional model building module for a nuclear power plant 120 includes: a texture adding module 121, connected to the shader module 112 and configured to add a second node parameter and a third node parameter to the thermal-hydraulic three-dimensional basic model for a nuclear power plant, to control normal texture and bubble texture; a texture overlaying module 122, connected to the texture adding module 121 and configured to package the basic texture, the normal texture and the bubble texture, list the first node parameter, the second node parameter and the third node parameter, and control the thermal-hydraulic three-dimensional basic model for a nuclear power plant via the first node parameter, the second node parameter and the third node parameter; a rendering module 123, connected to the texture overlaying module 122 and configured to complete rendering configuration and setting files in the shader basic program, and digitize the first node parameter, the second node parameter and the third node parameter; and a debugging module 124, connected to the rendering module 123 and configured to adjust range values of the first node parameter, the second node parameter and the third node parameter, debug overall texture effect, and construct a thermal-hydraulic three-dimensional model for a nuclear power plant.

A material shader with thermal-hydraulic characteristics of a nuclear power plant is constructed through the model building module 100. Different characteristic changes are controlled through different node parameters, such as: controlling the color change of the model through the temperature node parameter, controlling bubble generation, flow and destruction and other related characteristics changes via bubble textrue. In this way, a series of three-dimensional models suitable for representing various thermal-hydraulic phenomena are constructed, tthereby providing model support for the entire system, opening a number of node parameters to the outside, providing a model interface for the real-time data of the simulator 10, which enables the thermal-hydraulic three-dimensional model for a nuclear power plant to combine with the real-time data in the simulator 10, thereby realizing the thermal-hydraulic three-dimensional real-time dynamic simulation of the nuclear power plant.

Referring to Fig. 4: the data processing module 200 includes: an initialization module 210, configured to initialize via a program initialization entry and obtain configuration file information, and create thread management objects; an object creating module 220, configured to creat a socket udp object, acquire real-time data in the nuclear power plant simulator 10 in real time, and send the real-time data to a data processing center for storage; and a data transferring module 230, connected to the object creating module 220 and configured to creat a sub-thread via the thread management objects, to transfer the real-time data stored in the data processing center to the data driving module 300 in real time.

Socket is the programming interface of network application. Each socket is represented by a semi-relative description, such as protocol, local address or local port. A complete socket uses a relative description, supplemented by the remote address and remote port. Each socket has a unique socket number, which is allocated by the local operating system. The udp protocol is a connectionless transport layer protocol. The udp protocol is mainly configured to transfer the data passed by the application to the network layer in blocks, so as to ensure that the group information can be received. The present invention adopts the socket udp object to transmit data, which is a connectionless service, and the transmitted data is independent from each other. The transmission efficiency is high, and the efficiency of the thermal-hydraulic three-dimensional real-time dynamic simulation of the nuclear power plant is improved.

Referring to Fig. 5, the sub-thread includes: a data acquisition thread, configured to wait to receive the real-time data in the simulator 10, and receive the real-time data and updates latest real-time data to a data memory dictionary when the real-time data in the simulator 10 changes; a data packaging thread, configured to package the updated real-time data in the data memory dictionary at a fixed frequency and put the same into a data memory queue; a data sending thread, configured to obtain real-time data from the data memory queue at a fixed frequency and send the same to the data driving module 300 via the socket udp object; and a daemon thread, configured to prevent the data acquisition thread, the data packing thread and the data sending thread from stopping due to program exception.

More specifically, if the data acquisition thread stops abnormally, the daemon thread will make the data acquisition thread to operate again, to ensure the normal operation of the data processing module 200. It should be noted that, in the present invention, the data acquisition thread receiving real-time data also includes filtering the real-time data in the simulator 10, to select the real-time data related to thermal hydraulics and storing the selected data in the data memory dictionary. The simulator 10 has a wide variety of received data types and huge real-time data. Filtering out the real-time data related to thermal hydraulics and storing the selected data in the data memory dictionary, and periodically reading the data stored in the data memory dictionary into the data memory queue, can reduce frequent access to the simulator 10, to avoid data blocking and improve data availability and retrieval efficiency.

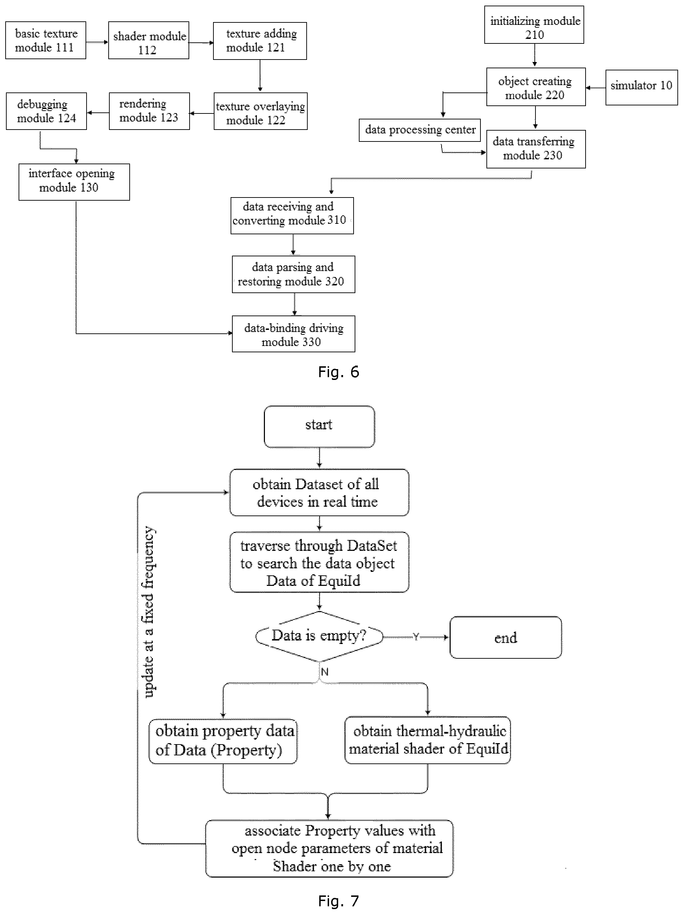

Referring to Fig. 6, the data driving module 300 includes a data receiving and converting module 310, connected to the data transferring module 230, and configured to receive real-time data via a service interface and convert the real-time data into a lightweight byte sequence via a serialization interface; a data parsing and restoring module 320, connected to the data receiving and converting module 310, and configured to parse and restor the real-time data according to a specified format via a deserialization interface; and a data-binding driving module 330, connected to the data parsing and restoring module 320 and the interface opening module 130, and configured to correspondingly bind the parsed and restored real-time data to the first node parameter, the second node parameter and the third node parameter of the thermal-hydraulic three-dimensional model for a nuclear power plant according to properties thereof, and after binding, drive the the first node parameter, the second node parameter and the third node parameter to change in real time, to realize three-dimensional real-time dynamic change of the thermal-hydraulic three-dimensional model for a nuclear power plant. The present invention realizes the association between the real-time data of the simulator 10 and the thermal-hydraulic three-dimensional model for a nuclear power plant through a lightweight data-driving interface, which can improve the transmission efficiency of the real-time data effectively, thereby ensuring that the dynamic simulation of the real-time data driving model can carry out smoothly.

More specifically, referring to Fig. 7, a single device (represented by Equild) is used to describe the specific steps of data-binding drive thereof in detail: Firstly, the data object collection (represented by DataSet) of all devices is obtained in real time; Secondly, the DataSet is traversed through to match to search the the corresponding data object (represented by Data) of Equild. If Data is found, stop the traversal; determine whether the Data is empty, if the Data is not empty, obtain the corresponding property data of the Data (represented by Property); then obtain the material shader module 112 of the EquiId thermal-hydraulic model. Finally associates the Property value with the open multiple node parameters in real time according to a fixed frequency, to realize the real-time driving simulation of the thermal-hydraulic effect image. By binding the property data with a number of node parameters, the real-time data of the simulator 10 can be associated with the digital three-dimensional model, thereby providing a three-dimensional real-time dynamic visualization method for the thermal-hydraulic simulation of the nuclear power plant, so as to more intuitively and vividly reproduce the operation conditions of the system under various working conditions of the nuclear power plant.The thermal-hydraulic three-dimensional model established by the present invention has a variable color which can change with the change of parameters. The received real-time data is associated with the thermal-hydraulic three-dimensional model via the data driving module 300. In other words, the received real-time data are correspondingly displayed in different colored areas of the established thermal-hydraulic three-dimensional model, so that it can be displayed more intuitively and clearly.

### Second Embodiment

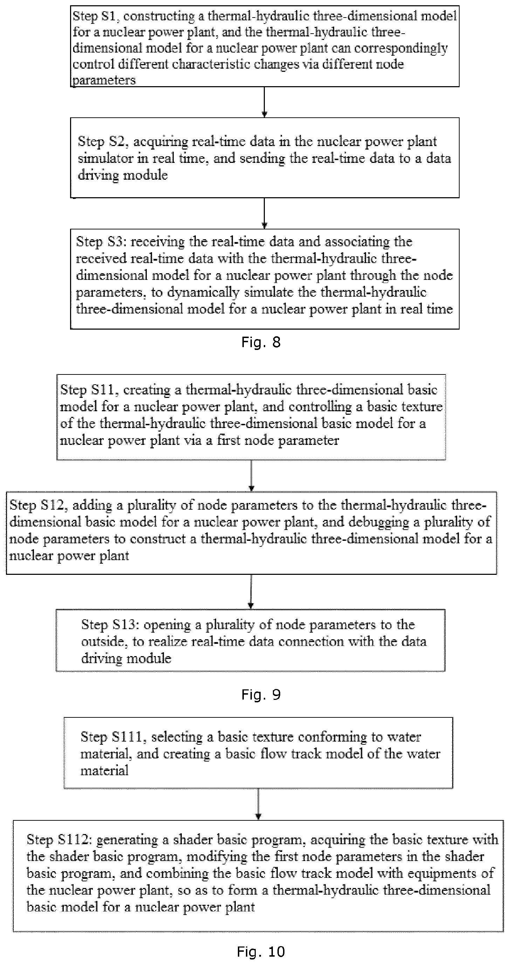

Referring to Fig. 8, the second embodiment of the present invention provides a thermal-hydraulic three-dimensional real-time dynamic simulation method for a nuclear power plant, including the steps of:
Step S1, constructing a thermal-hydraulic three-dimensional model for a nuclear power plant, and the thermal-hydraulic three-dimensional model for a nuclear power plant can correspondingly control different characteristic changes via different node parameters;
Step S2, acquiring real-time data in the nuclear power plant simulator in real time, and sending the real-time data to a data driving module; and
Step S3: receiving the real-time data and associating the received real-time data with the thermal-hydraulic three-dimensional model for a nuclear power plant through the node parameters, to dynamically simulate the thermal-hydraulic three-dimensional model for a nuclear power plant in real time. The present invention can more intuitively and vividly reproduce the operation conditions of the system under various working conditions of the nuclear power plant. The present invention also provides a new training method for the training of relevant personnel, to improve the training effect.

Referring to Fig. 9, step S1 includes the steps of:
Step S11, creating a thermal-hydraulic three-dimensional basic model for a nuclear power plant, and controlling a basic texture of the thermal-hydraulic three-dimensional basic model for a nuclear power plant via a first node parameter;
Step S12, adding a plurality of node parameters to the thermal-hydraulic three-dimensional basic model for a nuclear power plant, and debugging a plurality of node parameters to construct a thermal-hydraulic three-dimensional model for a nuclear power plant; and
Step S13: opening a plurality of node parameters to the outside, to realize real-time data connection with the data driving module.

Via building a series of three-dimensional models suitable for representing various thermal-hydraulic phenomena, providing model support for the entire system, setting and opening a number of node parameters, and providing model interfaces for real-time data, it is convenient to bind the thermal-hydraulic three-dimensional model for a nuclear power plant to the real-time data, so as to realize thermal-hydraulic three-dimensional real-time dynamic simulation of the nuclear power plants.

Referring to Fig. 10, S11 includes the steps of:
Step S111, selecting a basic texture conforming to water material, and creating a basic flow track model of the water material; and
Step S112: generating a shader basic program, acquiring the basic texture with the shader basic program, modifying the first node parameters in the shader basic program, and combining the basic flow track model with equipments of the nuclear power plant, so as to form a thermal-hydraulic three-dimensional basic model for a nuclear power plant.

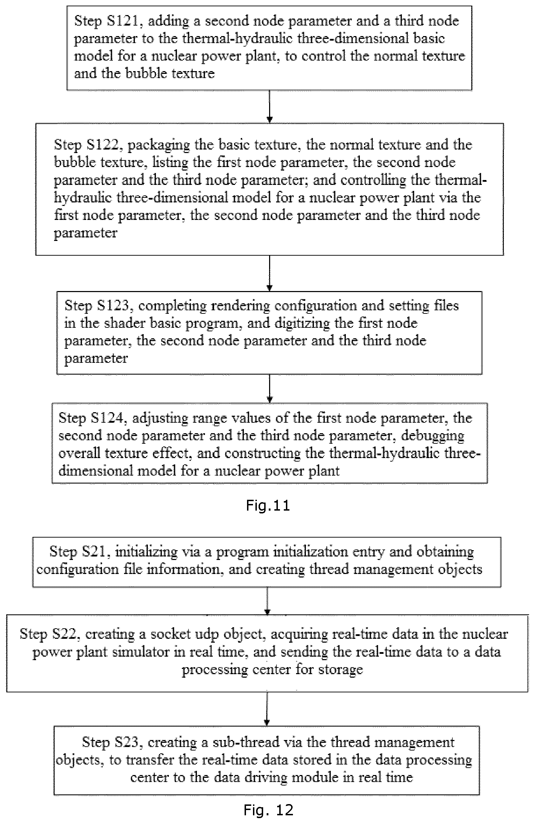

Referring to Fig. 11, step S12 includes the steps of:
Step S121, adding a second node parameter and a third node parameter to the thermal-hydraulic three-dimensional basic model for a nuclear power plant, to control the normal texture and the bubble texture;
Step S122, packaging the basic texture, the normal texture and the bubble texture, listing the first node parameter, the second node parameter and the third node parameter; and controlling the thermal-hydraulic three-dimensional model for a nuclear power plant via the first node parameter, the second node parameter and the third node parameter;
Step S123, completing rendering configuration and setting files in the shader basic program, and digitizing the first node parameter, the second node parameter and the third node parameter; and
Step S124, adjusting range values of the first node parameter, the second node parameter and the third node parameter, debugging overall texture effect, and constructing the thermal-hydraulic three-dimensional model for a nuclear power plant.

Referring to Fig. 12, step S2 includes the steps of:
Step S21, initializing via a program initialization entry and obtaining configuration file information, and creating thread management objects;
Step S22, creating a socket udp object, acquiring real-time data in the nuclear power plant simulator in real time, and sending the real-time data to a data processing center for storage; and
Step S23, creating a sub-thread via the thread management objects, to transfer the real-time data stored in the data processing center to the data driving module 300 in real time.

The sub-thread includes a data acquisition thread, configured to wait to receive the real-time data in the simulator 10, and receive the real-time data and updates latest real-time data to a data memory dictionary when the real-time data in the simulator 10 changes; a data packaging thread, configured to package the updated real-time data in the data memory dictionary at a fixed frequency and put the same into a data memory queue; a data sending thread, configured to obtain real-time data from the data memory queue at a fixed frequency and send the same to the data driving module 300 via the socket udp object; and a daemon thread, configured to prevent the data acquisition thread, the data packing thread and the data sending thread from stopping due to program exception.

More specifically, if the data acquisition thread stops abnormally, the daemon thread will make the data acquisition thread to operate again, to ensure the normal operation of the data processing module 200. It should be noted that, in the present invention, the data acquisition thread receiving real-time data also includes filtering the real-time data in the simulator 10, to select the real-time data related to thermal hydraulics and storing the selected data in the data memory dictionary. The simulator 10 has a wide variety of received data types and huge real-time data. Filtering out the real-time data related to thermal hydraulics and storing the selected data in the data memory dictionary, and periodically reading the data stored in the data memory dictionary into the data memory queue, can reduce frequent access to the simulator 10, to avoid data blocking and improve data availability and retrieval efficiency.

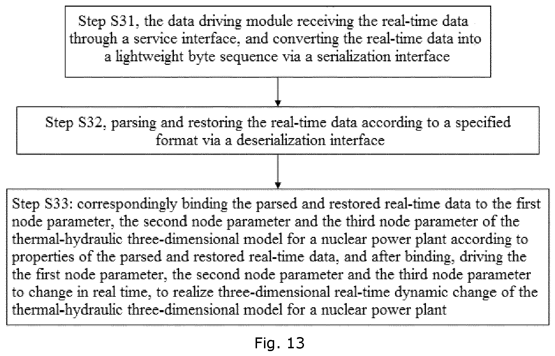

Referring to Fig. 13, step S3 includes the steps of:
Step S31, the data driving module 300 receiving the real-time data through a service interface, and converting the real-time data into a lightweight byte sequence via a serialization interface;
Step S32, parsing and restoring the real-time data according to a specified format via a deserialization interface; and
Step S33: correspondingly binding the parsed and restored real-time data to the first node parameter, the second node parameter and the third node parameter of the thermal-hydraulic three-dimensional model for a nuclear power plant according to properties of the parsed and restored real-time data, and after binding, driving the the first node parameter, the second node parameter and the third node parameter to change in real time, to realize three-dimensional real-time dynamic change of the thermal-hydraulic three-dimensional model for a nuclear power plant.

The present invention realizes the association between the real-time data of the simulator 10 and the thermal-hydraulic three-dimensional model for a nuclear power plant through a lightweight data-driving interface, which can improve the transmission efficiency of the real-time data remarkably, thereby ensuring that the dynamic simulation of the real-time data driving model can carry out smoothly.

It should be noted that, when the simulation method provided in the above embodiment is implemented in the simulation system, only the division of the above functional modules is used as an example for illustration. In practical applications, the above functions can be allocated to different functional modules according to needs. The internal structure of the device is divided into different functional modules, to implement all or part of the functions described above. In addition, the system embodiment and the method embodiment provided by the above embodiments belong to a same concept, and the specific implementation process thereof is described in the description of the method embodiment, which will not be repeated here.

The present invention provide a thermal-hydraulic three-dimensional real-time dynamic simulation system and method for a nuclear power plant, which combines the real-time data of the simulator with the thermal-hydraulic model for a nuclear power plant, to associate the real-time data of the simulator with the digital three-dimensional model. The present invention provides a three-dimensional real-time dynamic visualization for the thermal-hydraulic simulation of the nuclear power plant, to realize a more intuitive and vivid reproduction of the operating conditions of the system under various working conditions of the nuclear power plant. The present invention also provides a new training method for the training of relevant personnel, to improve the training effect.

The present invention adopts the shader basic program to design a thermal-hydraulic three-dimensional model controlled by node parameters. The model can control the change of different property phenomena by controlling the node parameters. For example, the color change of the model is controlled by the temperature data node, to provide a model interface for the simulation machine data driving. As to the real-time simulation data processing method based on the data dictionary and data queue, the received simulator data types are various and the real-time data is huge.

The present invention filters out the real-time data related to thermal hydraulics and storing the selected data in the data memory dictionary and periodically reads the data stored in the data memory dictionary into the data memory queue, which can reduce frequent access to the simulator 10, to avoid data blocking and improve data availability and retrieval efficiency.

The present invention realizes the association between the data of the simulator and the three-dimensional model via a lightweight data-driving interface, which improve the transmission efficiency of the real-time data remarkably, thereby ensuring that the dynamic simulation of the real-time data driving model can carry out smoothly.

The above described embodiments are only preferred embodiments of the present invention, and are not intended to limit the scope of the present invention. Any modification, equivalent replacement and improvement within the spirit and principle of the present invention should be included in the protection scope of the present invention.

## Claims

1. A thermal-hydraulic three-dimensional real-time dynamic simulation system for a nuclear power plant, **characterized in that** the thermal-hydraulic three-dimensional real-time dynamic simulation system for a nuclear power plant comprises:
a model building module (100), configured to construct a thermal-hydraulic three-dimensional model for a nuclear power plant, wherein the thermal-hydraulic three-dimensional model for a nuclear power plant may correspondingly control different characteristics changes via different node parameters;
a data processing module (200), connected to a nuclear power plant simulator (10) and configured to acquire real-time data within the nuclear power plant simulator (10) in real time and send the real-time data to a data driving module (300); and
a data driving module (300), connected to the model building module (100) and the data processing module (200) and configured to receive the real-time data and associate the received real-time data with the thermal-hydraulic three-dimensional model for a nuclear power plant via the node parameters, to dynamically simulate the thermal-hydraulic three-dimensional model for a nuclear power plant in real time.

2. The thermal-hydraulic three-dimensional real-time dynamic simulation system for a nuclear power plant according to claim 1, **characterized in that** the model building module (100) comprises:
a thermal-hydraulic basic model building module for a nuclear power plant (110), configured to build a thermal-hydraulic three-dimensional basic model for a nuclear power plant and control a basic texture of the thermal-hydraulic three-dimensional basic model for a nuclear power plant via a first node parameter;
a thermal-hydraulic three-dimensional model building module for a nuclear power plant (120) connected to the thermal-hydraulic basic model building module for a nuclear power plant (110), and configured to add a plurality of node parameters to the thermal-hydraulic three-dimensional basic model for a nuclear power plant, debug a plurality of node parameters, and build a thermal-hydraulic three-dimensional model for a nuclear power plant; and
an interface opening module (130), connected to the thermal-hydraulic three-dimensional model building module for a nuclear power plant (120), and configured to open a plurality of node parameters to the outside, so as to realize real-time data connection with the data driving module (300).

3. The thermal-hydraulic three-dimensional real-time dynamic simulation system for a nuclear power plant according to claim 2, **characterized in that**, the thermal-hydraulic basic model building module for a nuclear power plant (110) comprises:
a basic texture module (111), configured to select basic texture conforming to a water material and create a basic flow track model of the water material; and
a shader module (112), connected to the basic texture module (111) and configured to generat a shader basic program, acquire the basic texture via the shader basic program, modify a first node parameter in the shader basic program, and combine the basic flow track model with equipments of the nuclear power plant, to form a thermal-hydraulic three-dimensional basic model for a nuclear power plant.

4. The thermal-hydraulic three-dimensional real-time dynamic simulation system for a nuclear power plant according to claim 3, **characterized in that** the thermal-hydraulic three-dimensional model building module for a nuclear power plant (120) comprises:
a texture adding module (121), connected to the shader module (112) and configured to add a second node parameter and a third node parameter to the thermal-hydraulic three-dimensional basic model for a nuclear power plant, to control normal texture and bubble texture;
a texture overlaying module (122), connected to the texture adding module (121) and configured to package the basic texture, the normal texture and the bubble texture, and list the first node parameter, the second node parameter and the third node parameter, and control the thermal-hydraulic three-dimensional basic model for a nuclear power plant via the first node parameter, the second node parameter and the third node parameter;
a rendering module (123), connected to the texture overlaying module (122) and configured to complete rendering configuration and setting files in the shader basic program, and digitize the first node parameter, the second node parameter and the third node parameter; and
a debugging module (124), connected to the rendering module (123) and configured to adjust range values of the first node parameter, the second node parameter and the third node parameter, debug overall texture effect, and construct a thermal-hydraulic three-dimensional model for a nuclear power plant.

5. The thermal-hydraulic three-dimensional real-time dynamic simulation system for a nuclear power plant according to claim 4, **characterized in that** the data processing module (200) comprises:
an initializing module (210), configured to initialize via a program initialization entry and obtain configuration file information, and create thread management objects;
an object creating module (220), configured to creat a socket udp object, acquire real-time data in the nuclear power plant simulator (10) in real time, and send the real-time data to a data processing center for storage; and
a data transferring module (230), connected to the object creating module (220) and configured to creat a sub-thread via the thread management objects, to transfer the real-time data stored in the data processing center to the data driving module (300) in real time.

6. The thermal-hydraulic three-dimensional real-time dynamic simulation system for a nuclear power plant according to claim 5, **characterized in that** the sub-thread comprises:
a data acquisition thread, configured to wait to receive the real-time data in the simulator (10), and receive the real-time data and updates latest real-time data to a data memory dictionary when the real-time data in the simulator (10) changes;
a data packaging thread, configured to package the updated real-time data in the data memory dictionary at a fixed frequency and put the same into a data memory queue;
a data sending thread, configured to obtain real-time data from the data memory queue at a fixed frequency and send the same to the data driving module (300) via the socket udp object; and
a daemon thread, configured to prevent the data acquisition thread, the data packing thread and the data sending thread from stopping due to program exception.

7. The thermal-hydraulic three-dimensional real-time dynamic simulation system for a nuclear power plant according to claim 6, **characterized in that** the data driving module (300) comprises:
a data receiving and converting module (310), connected to the data transferring module (230), and configured to receive real-time data via a service interface and convert the real-time data into a lightweight byte sequence via a serialization interface;
a data parsing and restoring module (320), connected to the data receiving and converting module (310), and configured to parse and restor the real-time data according to a specified format via a deserialization interface; and
a data-binding driving module (330), connected to the data parsing and restoring module (320) and the interface opening module (130), and configured to correspondingly bind the parsed and restored real-time data to the first node parameter, the second node parameter and the third node parameter of the thermal-hydraulic three-dimensional model for a nuclear power plant according to properties thereof, and after binding, drive the the first node parameter, the second node parameter and the third node parameter to change in real time, to realize three-dimensional real-time dynamic change of the thermal-hydraulic three-dimensional model for a nuclear power plant.

8. A thermal-hydraulic three-dimensional real-time dynamic simulation method for a nuclear power plant, **characterized in that** the thermal-hydraulic three-dimensional real-time dynamic simulation method for a nuclear power plant comprises the steps of:
Step S1, constructing a thermal-hydraulic three-dimensional model for a nuclear power plant, and the thermal-hydraulic three-dimensional model for a nuclear power plant can correspondingly control different characteristic changes via different node parameters;
Step S2, acquiring real-time data in the nuclear power plant simulator (10) in real time, and sending the real-time data to a data driving module (300); and
Step S3: receiving the real-time data and associating the received real-time data with the thermal-hydraulic three-dimensional model for a nuclear power plant through the node parameters, to dynamically simulate the thermal-hydraulic three-dimensional model for a nuclear power plant in real time.

9. The thermal-hydraulic three-dimensional real-time dynamic simulation method for a nuclear power plant according to claim 8, **characterized in that** step S1 comprises the steps of:
Step S11, creating a thermal-hydraulic three-dimensional basic model for a nuclear power plant, and controlling a basic texture of the thermal-hydraulic three-dimensional basic model for a nuclear power plant via a first node parameter;
Step S12, adding a plurality of node parameters to the thermal-hydraulic three-dimensional basic model for a nuclear power plant, and debugging a plurality of node parameters to construct a thermal-hydraulic three-dimensional model for a nuclear power plant; and
Step S13: opening a plurality of node parameters to the outside, to realize real-time data connection with the data driving module (300).

10. The thermal-hydraulic three-dimensional real-time dynamic simulation method for a nuclear power plant according to claim 9, **characterized in that** step S11 comprises the steps of:
Step S111, selecting a basic texture conforming to water material, and creating a basic flow track model of the water material; and
Step S112: generating a shader basic program, acquiring the basic texture with the shader basic program, modifying the first node parameters in the shader basic program, and combining the basic flow track model with equipments of the nuclear power plant, so as to form a thermal-hydraulic three-dimensional basic model for a nuclear power plant.

11. The thermal-hydraulic three-dimensional real-time dynamic simulation method for a nuclear power plant according to claim 9, **characterized in that** step S12 comprises the steps of:
Step S121, adding a second node parameter and a third node parameter to the thermal-hydraulic three-dimensional basic model for a nuclear power plant, to control the normal texture and the bubble texture;
Step S122, packaging the basic texture, the normal texture and the bubble texture, listing the first node parameter, the second node parameter and the third node parameter; and controlling the thermal-hydraulic three-dimensional model for a nuclear power plant via the first node parameter, the second node parameter and the third node parameter;
Step S123, completing rendering configuration and setting files in the shader basic program, and digitizing the first node parameter, the second node parameter and the third node parameter; and
Step S124, adjusting range values of the first node parameter, the second node parameter and the third node parameter, debugging overall texture effect, and constructing the thermal-hydraulic three-dimensional model for a nuclear power plant.

12. The thermal-hydraulic three-dimensional real-time dynamic simulation method for a nuclear power plant according to claim 11, **characterized in that** step S2 comprises the steps of:
Step S21, initializing via a program initialization entry and obtaining configuration file information, and creating thread management objects;
Step S22, creating a socket udp object, acquiring real-time data in the nuclear power plant simulator (10) in real time, and sending the real-time data to a data processing center for storage; and
Step S23, creating a sub-thread via the thread management objects, to transfer the real-time data stored in the data processing center to the data driving module (300) in real time.

13. The thermal-hydraulic three-dimensional real-time dynamic simulation method for a nuclear power plant according to claim 11, **characterized in that** step S3 comprises the steps of:
Step S31, the data driving module (300) receiving the real-time data through a service interface, and converting the real-time data into a lightweight byte sequence via a serialization interface;
Step S32, parsing and restoring the real-time data according to a specified format via a deserialization interface; and
Step S33: correspondingly binding the parsed and restored real-time data to the first node parameter, the second node parameter and the third node parameter of the thermal-hydraulic three-dimensional model for a nuclear power plant according to properties of the parsed and restored real-time data, and after binding, driving the the first node parameter, the second node parameter and the third node parameter to change in real time, to realize three-dimensional real-time dynamic change of the thermal-hydraulic three-dimensional model for a nuclear power plant.
